# DEMANDE DE BREVET EUROPEEN

(11) **EP 4 140 919 A1**
(43) Date de publication de la demande: **01.03.2023**
(21) Numéro de dépôt: 21192722.3
(22) Date de dépôt: 24.08.2021
(51) Int. Cl.: B65G 17/12

(54) **CONVOYEUR PERMUTATEUR DE PALETTES**

(71) Demandeur: Concept & Forme Developpements SA, 5170 Profondeville (BE)
(72) Inventeur: PITANCE, Gérard, 5170 Profondeville (BE)
(74) Mandataire: AWA Benelux

(57) **Abrégé**

Un permutateur (1) de palettes comprenant :
- une structure portante (2) ;
- au moins deux cadres mobiles (6) aptes, en utilisation, à porter chacun une palette (18), chaque cadre mobile (6) comprenant une première paire de galets (81, 82) et une seconde paire de galets (83, 84) sur ses côtés latéraux ;
- un système de convoyage (3) situé sur la structure portante (2) permettant le déplacement des cadres mobiles (6) et relié à un arbre moteur (11) ;
- un ensemble de rainures de guidage (71, 72, 73A, 73B, 74A, 74B) formant une boucle fermée à rails séparés et un chemin de guidage pour chaque cadre mobile (6), comprenant un premier chemin et un second chemin, lesdites rainures (71, 72, 73A, 73B, 74A, 74B) accueillant les galets (81, 82, 83, 84) des cadres mobiles (6) ;
- un système d'aiguillages à cames (12, 121, 122, 123) des paires de galets (81, 82 ; 83, 84) dans les rainures de guidage (71, 72, 73A, 73B, 74A, 74B) ;
le système d'aiguillages à cames (121, 122, 123) étant apte à guider, en utilisation, les paires de galets (81, 82, 10 ; 83, 84, 9) de sorte que la première paire (81, 82, 10) emprunte le premier chemin et la seconde paire (83, 84, 9) emprunte le second chemin de manière à déplacer les cadres mobiles (6) le long de la boucle fermée tout en restant en permanence parallèles entre eux horizontalement et orientés dans le même sens.

## Description

### Objet de l'invention

La présente invention se rapporte au domaine des convoyeurs automatisés. En particulier, la présente invention concerne un convoyeur de palettes en entrée/sortie d'un magasin automatisé à tours.

### Etat de la technique

Dans les ateliers de production, le taux d'exploitation des machines-outils est souvent pénalisé par les périodes d'interruption du travail consécutives aux opérations de manutention liées à l'approvisionnement en pièces brutes à façonner et à l'évacuation des pièces façonnées. La présente analyse s'est particulièrement focalisée sur le cas des presses-plieuses manuelles et/ou automatisées, mais celle-ci peut être adaptée à d'autres domaines imposant des flux d'approvisionnement et d'évacuation de différentes matières, dont l'optimisation permet d'augmenter le taux d'exploitation des outils de production.

Plusieurs cas de figure sont observables lors de l'approvisionnement et l'évacuation des pièces. Dans un premier cas, la presse-plieuse est desservie par un opérateur chargé également des manutentions, à savoir, l'approvisionnement de son poste de travail en pièces à plier et l'évacuation des pièces pliées dont la volumétrie plus importante conduit assez rapidement à une saturation de l'espace disponible et à la nécessité de libérer cet espace pour y fournir de nouvelles pièces à fabriquer. L'inconvénient de cette situation réside dans le fait que la machine n'est pas productive pendant les périodes de temps où l'opérateur est occupé à des tâches de manutention. En outre, l'opérateur doit parfois attendre qu'un engin de levage, généralement un élévateur partagé entre plusieurs postes, soit disponible, ce qui accroît encore les temps d'improductivité de la machine et de son opérateur.

Dans un second cas, les opérations de manutention (approvisionnement et évacuation) sont assurées par un manutentionnaire desservant plusieurs postes de travail. Les opérateurs-machines peuvent ainsi se concentrer totalement sur leur tâche spécifique. Dans ce cas de figure, les périodes de temps où la machine est improductive sont déterminées, d'une part, par le temps d'attente de la disponibilité du manutentionnaire qui peut parfois être occupé sur un autre poste de travail et d'autre part, par le temps nécessaire au manutentionnaire pour procéder à l'enlèvement et au restockage des palettes à évacuer, ou encore, pour évacuer une palette d'approvisionnement vide et la remplacer par une nouvelle palette de pièces à façonner.

Dans un troisième cas, la presse-plieuse est robotisée et on parle dans ce cas d'une cellule de pliage. Une partie de la surface de la cellule est dédiée au stockage des pièces à plier généralement disposées sur des palettes. Une autre partie de la surface de la cellule est dédiée aux palettes destinées à recevoir les pièces après pliage. Comme dans le cas de figure précédent, la productivité de la cellule sera dépendante de la disponibilité du manutentionnaire et des temps de manutentions. Le degré d'autonomie de la cellule de pliage robotisée reste donc dépendant de la présence d'une assistance humaine ponctuelle et récurrente à la fois.

A l'heure actuelle, il existe dès lors un réel intérêt d'optimiser le taux d'exploitation des postes de travail, par la mise à disposition instantanée de ce qui est requis pour leur fonctionnement. En effet, la productivité est directement liée à la mise à disposition des éléments dont les postes de travail ont besoin.

Les documents DE 10 2014 220 046 A1 et AU 1634797 A divulguent des dispositifs de chargement ou déchargement de palettes comprenant une palette de réserve. Les différentes palettes sont déplacées au moyen de bandes transporteuses et d'un ascenseur. On exploite le fait que les palettes chargées et vides se trouvent à différentes hauteurs, ce qui permet de les déplacer horizontalement par glissement de l'une en dessous de l'autre.

Le document WO 2020/094318 A1 décrit un convoyeur en boucle fermée de type dessus/dessous dans lequel les palettes circulent sur des chemins (rails) décalés. Pour ce faire, chaque palette possède une paire de rouleaux avant, couplés à des patins, et une paire de rouleaux arrière. Les paires de rouleaux sont montés sur des paires de rails différentes et décalées. Cela permet de maintenir les palettes sensiblement horizontales dans les zones de transfert sur le convoyeur, ce qui est un impératif dans le transport de bouteilles et cela permet également leur chargement/déchargement par un système de couplage au moyen d'arêtes et de peignes. Néanmoins, les palettes de transfert se déplacent ici « renversées » sur le chemin inférieur de la boucle.

### Buts de l'invention

La présente invention a pour but de fournir un convoyeur de palettes servant à permuter simultanément au moins deux palettes, l'une prenant la place de l'autre ou de celle qui la suit et inversement pour permettre une réelle automatisation productive des flux.

Un des buts principaux de la présente invention est de permettre la permutation de palettes sans changer l'orientation de la charge tout au long de l'opération.

L'invention vise en particulier à optimiser le taux d'exploitation d'un poste de travail par la mise à disposition instantanée de ce qui est requis pour son fonctionnement. Les flux entrant(s) et sortant(s) du poste de travail peuvent ainsi être toujours dédoublés d'un stock tampon garantissant un fonctionnement avec une interruption limitée de la machine et de son opérateur (ou de la cellule dans le cas où la machine est robotisée).

La présente invention a également pour but de fournir une solution permettant d'améliorer la flexibilité de la tâche des manutentionnaires, ou des systèmes de gestion automatique des flux. Le travail du manutentionnaire (ou de l'automate) est rendu plus flexible car il peut mieux prioriser les flux de manutention entre les différents postes de travail qu'il dessert.

Un autre but poursuivi par l'invention est de fournir un convoyeur de palettes simple et adaptable à une grande variété d'équipements. En effet, celui-ci doit être combinable par exemple avec différents types de véhicules automatisés, et être conçu également pour s'intégrer aux tours de stockage d'un magasin automatisé linéaire ou à un laser de découpe.

### Principaux éléments caractéristiques de l'invention

Un premier aspect de la présente invention se rapporte à un permutateur de palettes comprenant :
- une structure portante ;
- au moins deux cadres mobiles aptes, en utilisation, à porter chacun une palette, chaque cadre mobile comprenant une première paire de galets et une seconde paire de galets sur ses côtés latéraux ;
- un système de convoyage situé sur la structure portante permettant le déplacement des cadres mobiles et relié à un arbre moteur ;
- un ensemble de rainures de guidage formant une boucle fermée à rails séparés et un chemin de guidage pour chaque cadre mobile, comprenant un premier chemin et un second chemin, lesdites rainures accueillant les galets des cadres mobiles ;
- un système d'aiguillages à cames des paires de galets dans les rainures de guidage ;
le système d'aiguillages à cames étant apte à guider, en utilisation, les paires de galets de sorte que la première paire emprunte le premier chemin et la seconde paire emprunte le second chemin de manière à déplacer les cadres mobiles le long de la boucle fermée tout en restant en permanence parallèles entre eux horizontalement et orientés dans le même sens.

Selon des formes d'exécution préférées de l'invention, le permutateur de palettes comprend en outre une des caractéristiques suivantes, ou une combinaison appropriée de celles-ci :
- la structure portante comprend deux poutres parallèles, le système de convoyage et l'ensemble de rainures de guidage étant répartis de manière symétrique sur ou dans chacune des poutres, de sorte que les cadres mobiles sont déplacés entre les deux poutres par le système de convoyage;
- le système de convoyage comprend une pluralité de pignons et de chaînes de transmission, ou alternativement une pluralité de poulies et courroies crantées, pour mettre en mouvement les deux cadres mobiles via deux chaînes de convoyage situées de part et d'autre des cadres mobiles, de sorte que les cadres mobiles sont déplacés à l'aide de galets mobiles roulant à l'intérieur des rainures de guidage ;
- le système d'aiguillages comprend une pluralité de cames permettant de guider les première et seconde paires de galets respectivement dans les premier et second chemins des rainures de guidage ;
- les rainures de guidages comprennent une rainure correspond à un plan de déplacement horizontal supérieur, une rainure correspond à un plan de déplacement horizontal inférieur, deux rainures en demi-cercle permettant le déplacement descendant du plan supérieur au plan inférieur, et deux rainures en demi-cercle permettent le déplacement montant du plan inférieur au plan supérieur, lesdites rainures définissant les deux chemins précités, lesquels ont une forme oblongue et sont décalés horizontalement l'un par rapport à l'autre ;
- les galets de la première paire de galets comprennent un axe prolongé permettant à la fois à un jeu de pignons de supporter lesdits galets lors de leur déplacement dans les rainures en demi-cercle reliant les deux plans de déplacement horizontaux, et également de liaisonner lesdits galets aux chaînes de convoyage ;
- les galets de la deuxième paire de galets comprennent un axe débordant, permettant à un jeu de pignons de supporter lesdits galets lors de leur déplacement dans les rainures en demi-cercle reliant les deux plans de déplacement horizontaux ;
- les chemins de roulement des deux paires de galets de chaque cadre mobile ont une partie commune au niveau des plans de déplacement horizontal supérieur et inférieur et sont distincts au niveau des rainures en demi-cercle permettant les déplacements montant et descendant des cadres mobiles ;
- les cadres mobiles sont pleins ou ajourés.

L'invention se rapporte également à l'utilisation du permutateur de palettes décrit ci-dessus, pour la mise en oeuvre du cycle de mouvements suivants relatifs à l'échange des positions initiales d'un premier cadre mobile et d'un second cadre mobile, aptes à supporter chacun une palette :
- au début du cycle, le système de convoyage est activé par la mise en rotation de l'arbre moteur lorsque le premier cadre mobile est en position sur le plan de déplacement horizontal supérieur, chaque galet de roulement avant ayant son axe prolongé entraîné par la chaîne de convoyage et apte à s'engrener dans les pignons lors des mouvements de déplacement dans les rainures en demi-cercle reliant les deux plans de déplacement horizontaux ; et chaque galet de roulement arrière ayant son axe débordant apte à s'engrener dans les pignons lors des mouvements de déplacement dans les rainures en demi-cercle reliant les deux plans de déplacement horizontaux ;
- sous l'effet de l'entraînement, le galet de roulement avant arrive au croisement de la rainure horizontale supérieure et de la première rainure descendante ;
- une première came se trouvant à ce croisement étant en position abaissée, avec une partie droite suivie d'une partie oblique, le galet de roulement avant reste guidé dans la rainure horizontale supérieure et ensuite dans la seconde rainure descendante grâce au pignon, la rencontre du galet avec la partie oblique de la première came entraînant le relèvement de ladite came, la partie oblique basculant à l'horizontale et la partie droite étant relevée, libérant le passage dans la première rainure descendante pour le galet de roulement arrière ;
- une deuxième came se trouvant au croisement de la rainure horizontale supérieure avec la première rainure montante en position horizontale, le galet de roulement arrière franchit l'ouverture vers la première rainure montante et poursuit son chemin dans la rainure horizontale supérieure ;
- la première came étant relevée, le galet de roulement arrière est guidé dans la première rainure descendante ;
- lorsque le galet de roulement avant arrive au niveau de la rainure horizontale inférieure, il continue à être entraîné plus loin dans cette rainure par la chaîne de convoyage alors que, simultanément, le galet de roulement arrière arrive au niveau de la troisième came en fin de course dans la première rainure descendante, ladite troisième came étant en position abaissée, ce qui laisse passer le galet arrière ;
- le cadre mobile poursuit son déplacement dans la rainure horizontale inférieure et le galet de roulement avant soulève la troisième came pour continuer sa course ;
- le galet de roulement arrière supporté par le pignon est entraîné dans la seconde rainure montante et le galet de roulement avant supporté par le pignon est entraîné dans la première rainure montante, de manière à effectuer le transfert du plan de déplacement inférieur au plan de déplacement supérieur ;
- le galet de roulement avant débouche dans la rainure horizontale supérieure en soulevant la deuxième came et simultanément avec le galet de roulement arrière ;
- le premier cadre mobile revient à sa position de départ dans la rainure horizontale supérieure et les deuxième came et première came sont soit en position abaissée pour le cycle suivant grâce à la gravité, soit sont ramenées en position abaissée par un mécanisme ad hoc ;
- les mouvements sont similaires pour le second cadre mobile, celui-ci se trouvant au début du cycle en position sur le plan de déplacement horizontal inférieur.

Un autre aspect de la présente invention concerne une tour de stockage de magasin automatisé à tour ou vertical, comprenant, intégré à sa base, un permutateur de palettes tel que décrit ci-dessus.

Encore un autre aspect de l'invention concerne une installation de fabrication automatisée, comprenant un magasin automatisé ainsi qu'au moins une cellule de pliage et/ou une cellule de découpe laser, ledit magasin automatisé comprenant au moins une tour de stockage telle que décrite ci-dessus.

### Brève description des figures

La figure 1 représente une vue générale en trois dimensions d'une forme d'exécution du convoyeur permutateur de palettes selon la présente invention, le système comprenant en l'espèce deux cadres mobiles.

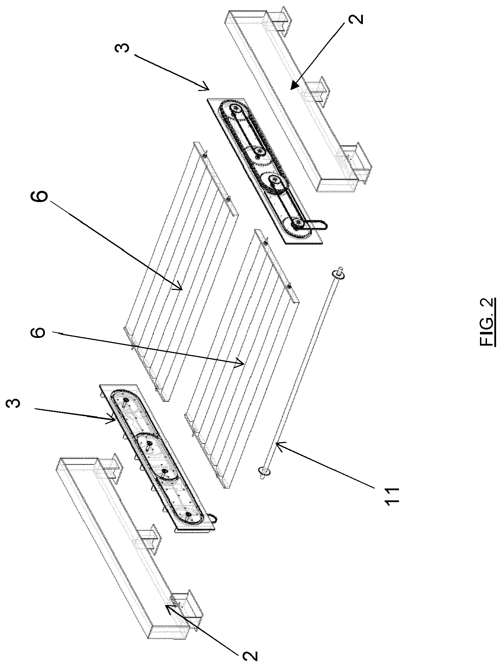

La figure 2 représente une vue en éclaté du permutateur de la figure 1.
La figure 3 représente une vue en trois dimensions d'un premier exemple de cadre mobile du convoyeur de palettes selon la présente invention.
La figure 4 représente une vue détaillée des galets du cadre mobile de la figure 3.
La figure 5 représente une vue de détail du premier exemple de cadre mobile combiné au système de convoyage du convoyeur permutateur selon la présente invention.
La figure 6 est une vue de la figure 5 avec le détail des repères de référence.
La figure 7 représente une vue en plan d'un exemple de système de transmission du convoyeur permutateur selon la présente invention.
La figure 8 représente une vue en élévation des différents types de rails d'un exemple de système de convoyage du convoyeur permutateur selon la présente invention.
La figure 9 représente un deuxième exemple de cadre mobile selon l'invention, celui-ci étant ouvert sur un côté afin d'y déposer facilement une palette à l'aide d'un chariot élévateur par exemple.
La figure 10 représente un troisième exemple de cadre mobile du convoyeur selon l'invention.
Les figures 11A à 11H représentent les étapes successives d'un cycle de permutation complet d'un cadre mobile avec différents aiguillages, selon un mode d'exécution de la présente invention.
La figure 12 représente une vue en trois dimensions d'un permutateur de palettes selon l'invention, comprenant trois cadres mobiles.
La figure 13 représente une vue en trois dimensions d'un permutateur de palettes selon l'invention avec trois jeux de deux cadres mobiles, les cadres mobiles étant ouverts d'un côté afin d'y poser facilement une palette à l'aide un chariot élévateur.
La figure 14 représente une vue en trois dimensions d'un permutateur de palettes selon l'invention avec deux cadres mobiles, associé à une tour de stockage d'un magasin automatisé linéaire.
La figure 15 représente une vue de détail des éléments d'insertion d'un permutateur selon l'invention dans une tour de magasin automatisé.
Les figures 16A et 16B représentent un segment de magasin automatisé dans lequel le poste de travail, une cellule de pliage par exemple, est connecté par un permutateur, respectivement deux permutateurs selon l'invention, aux tours du magasin.
La figure 17 représente un segment de magasin automatisé dans lequel le poste de travail, une cellule de pliage par exemple, est connecté par trois permutateurs aux tours du magasin.
La figure 18 représente une vue en plan d'un exemple d'installation combinant, d'une part, un permutateur selon l'invention équipé de trois cadres mobiles, intégré à un laser de découpe et d'autre part, trois permutateurs selon l'invention équipés de deux cadres mobiles intégrés aux tours d'un magasin automatisé. L'installation comporte en outre un robot se déplaçant sur un track.
La figure 19 représente une vue en trois dimensions de l'installation de la figure 18.
La figure 20 représente une combinaison de différents modes de gestion des flux d'approvisionnement d'une cellule robotisée, pourvue d'un permutateur selon la présente invention.
La figure 21 représente différentes cellules robotisées agencées autour d'un magasin automatisé linéaire afin de connecter l'ensemble des machines entre elles et augmenter ainsi l'autonomie de fonctionnement sans assistance et le taux d'exploitation de l'outil de production dans son ensemble.

### Description de formes d'exécution préférées de l'invention

La présente invention concerne un convoyeur permutateur de palettes, c'est-à-dire un système permettant de permuter simultanément au moins deux palettes, l'une prenant la place de l'autre ou de celle qui la suit sur le convoyeur et inversement, sans changer l'orientation de la charge afin de permettre une réelle automatisation des flux. Le convoyeur permutateur permet la création d'un stock tampon garantissant un fonctionnement de la production à interruptions limitées. Dans la suite de l'exposé, le convoyeur permutateur sera simplement désigné par permutateur.

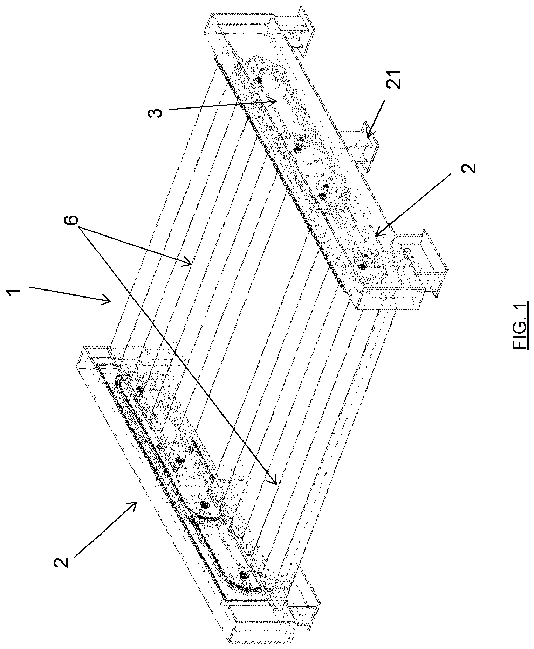

Le dispositif, tel qu'illustré sur la Figure 1, est constitué d'une structure portante 2, composée de deux poutres parallèles, et d'un système de convoyage 3. Le système de convoyage 3 comprend un ensemble d'éléments mécaniques situés sur ou intégrés à chacune des poutres de la structure portante 2, qui permettent la mise en mouvement d'au moins deux cadres mobiles 6 situés entre les deux poutres. Ces cadres mobiles 6 pourront servir de support pour des palettes de manutention par exemple, en particulier des palettes de dimensions standard telles que les palettes européennes (EPAL).

La structure portante 2 peut être soit posée au sol ou écartée de celui-ci par des pieds 21 de hauteur variable selon l'application envisagée. Les deux poutres parallèles de la structure portante 2 sont indépendantes ou reliées entre elles. Le dimensionnement et le mode de réalisation de la structure portante 2 sont déterminés par le type d'application envisagée et par la taille et le poids des éléments à supporter.

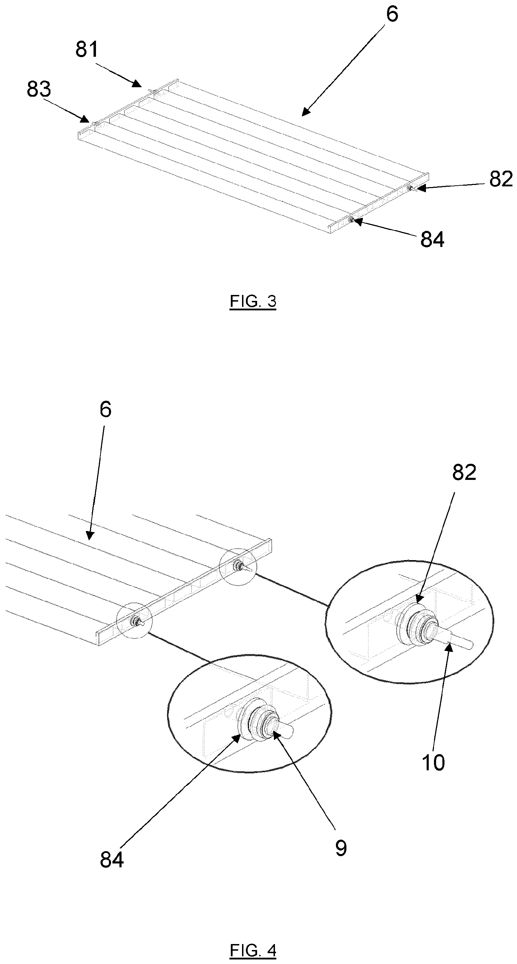

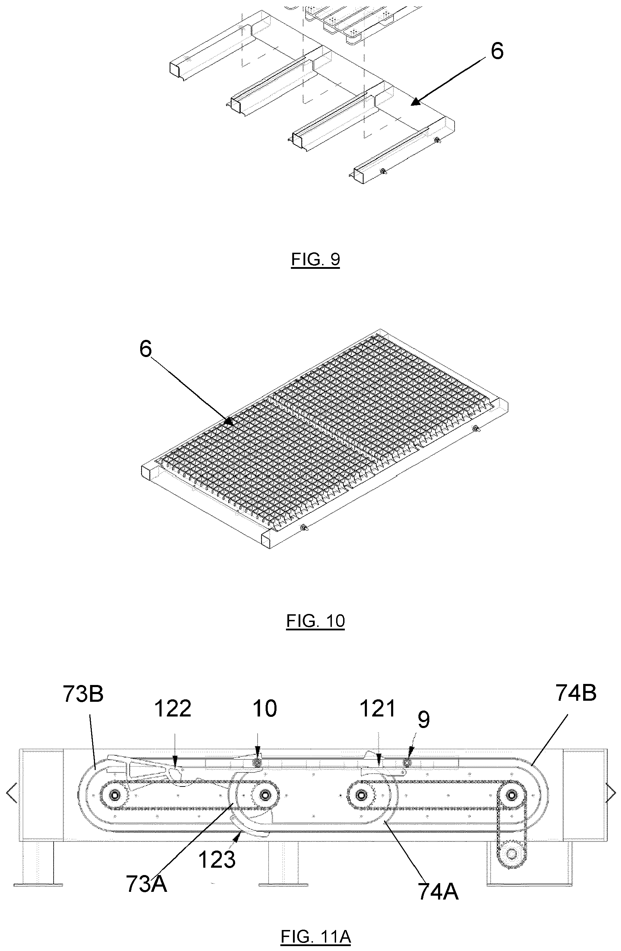

Les Figures 3, 9 et 10 décrivent, à titre exemplatif et non exhaustif, plusieurs principes d'exécution possibles pour les cadres mobiles 6. Ceux-ci sont soit essentiellement pleins (Figures 3 et 10), soit évidés, ajourés ou à claire voie (Figure 9), ce qui leur permet de supporter et déplacer divers types de palettes. La Figure 9 notamment illustre une variante d'exécution d'un cadre mobile 6, ouverte sur un de ses longs côtés et destinée à recevoir aisément plusieurs palettes standardisées, telles que des euro-palettes par exemple. L'ouverture selon l'un des longs côtés permet l'enlèvement ou la dépose des palettes par un véhicule de type robot à déplacement automatique (AGV). La Figure 10 illustre un cadre mobile 6 sous forme de table à peignes crénelés telle que celle utilisée dans les machine de découpe laser pour recevoir les tôles à découper.

Le système de convoyage 3 du permutateur 1 de la présente invention fonctionne en boucle fermée, tel que détaillé ci-dessous, de manière à pouvoir intervertir la position des cadres mobiles 6 en quelques secondes. Le convoyeur est de type « dessus/dessous » ou « à retour en dessous », c'est-à-dire que, lorsqu'il y a au moins deux cadres mobiles 6, l'un se trouve en position haute et l'autre en position basse, et ceux-ci échangent leurs positions via un déplacement opéré par le système de convoyage 3 selon un système dit à double rail ou à rails décalés.

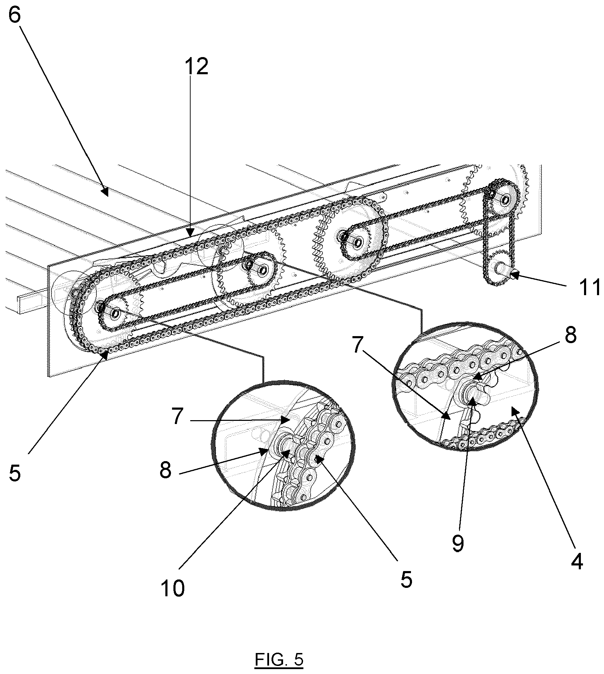

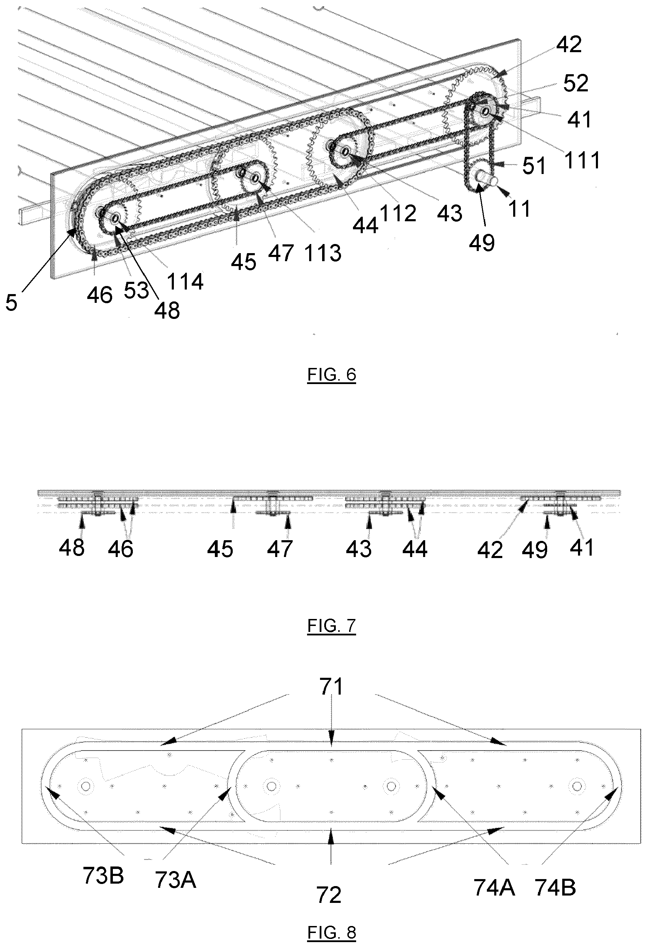

Le système de convoyage 3 comprend, tel qu'expliqué précédemment, un ensemble d'éléments mécaniques pour mettre en mouvement les cadres mobiles 6, à savoir un ensemble de pignons 4, 41-49 et de chaînes de transmission 51-53, ainsi que deux chaînes de convoyage 5 (Figure 5 et 6). Les pignons 4, 41-49 et chaines 5, 51-53 forment un train de roulement permettant de réaliser le déplacement parallèle et simultané des cadres mobiles 6, les chaines de convoyage 5 jouant un rôle d'entraînement des cadres mobiles 6 tel qu'expliqué par la suite. Dans certaines applications, les pignons 4, 41-49 et chaînes 5, 51-53 peuvent être avantageusement remplacés par des poulies et courroies crantées.

Chaque cadre mobile 6 est muni de galets de roulement et de guidage 8, 81 à 84 tels que représentés sur les Figures 3 et 4. Ceux-ci sont situés sur les côtés latéraux du cadre mobile 6 et coopèrent avec des rainures de guidage 7. Dans le cadre de la présente description, les côtés « latéraux » de chaque cadre mobile 6 sont considérés comme étant les côtés parallèles aux poutres de la structure portante 2 et les côtés « transversaux » comme étant ceux perpendiculaires à ces poutres. Les galets mobiles 8 fonctionnent par paires, une première paire (paire « avant ») avec les galets 81 et 82 et une seconde paire (paire « arrière ») avec les galets 83 et 84 (Figure 3). Dans le cadre de la présente description, la partie « avant » du système est considérée comme étant la partie située du côté où le cadre est en position avancée lorsqu'il est en position haute (donc juste avant d'amorcer sa descente en position basse), et inversement pour la partie « arrière ».

Les rainures de guidage 7, telles qu'illustrées sur la Figure 8, constituent un chemin de roulement pour les galets 8 des cadres mobiles 6. Un élément essentiel de l'invention réside dans le fait que la première paire de galets 81 et 82 et la seconde paire de galets 83 et 84 d'un même cadre mobile 6 vont emprunter un chemin différent au sein des rainures de guidage 7, afin de permettre de garder les deux cadres mobiles 6 à l'horizontale durant l'ensemble de leur déplacement. Les deux chemins différents sont empruntés grâce à un système d'aiguillages comme expliqué ci-dessous.

Plus spécifiquement, les rainures de guidage 7 sont détaillés à la Figure 8. La rainure 71 correspond à un plan de déplacement horizontal supérieur. La rainure 72 correspond à un plan de déplacement horizontal inférieur. Les rainures 73A, 73B en demi-cercle permettent le déplacement descendant du plan supérieur au plan inférieur tandis que les rainures 74A, 74B en demi-cercle permettent le déplacement montant du plan inférieur au plan supérieur. Les chemins de roulement des deux paires de galets 8 sont partiellement communs sur les parties horizontales mais différents au niveau des rainures en demi-cercle, ce qui permet les déplacements montant et descendant des cadres mobiles 6. En utilisation, la première paire de galets 81 et 82 va emprunter un chemin externe 73B pour la descente et un chemin interne 74A pour la montée, tandis que la seconde paire de galets va emprunter un chemin interne 73A pour la descente et un chemin externe 74B pour la montée. Ceci peut évidemment se faire de manière inverse, il s'agit ici d'un exemple pour la bonne compréhension de la présente invention, tout comme les définitions des parties « avant » et « arrière », qui dépendent du sens de rotation des galets 8 sur la boucle fermée, qui peut bien évidemment être inversée. Grâce à ce déplacement de type à rails décalés, un mouvement parallèle entre les deux cadres mobiles 6 est constamment maintenu. Une séparation verticale faible entre les deux niveaux horizontaux est préférable mais dépend du type d'application. Par exemple, une distance de 20 à 30 cm entre les plans horizontaux des deux cadres mobiles 6 peut être envisagée, avec préférentiellement une distance de 24 cm, ou plus si nécessaire.

Afin de permettre aux cadres mobiles 6 de suivre le chemin adéquat dans les rainures 7, le système est pourvu d'un système d'aiguillages, par exemple un ensemble de cames-ponts 12, 121-123 telles qu'illustrées par les Figures 5 et 11A à 11H. Le fonctionnement d'un exemple de système d'aiguillages est décrit en détail à la section suivante.

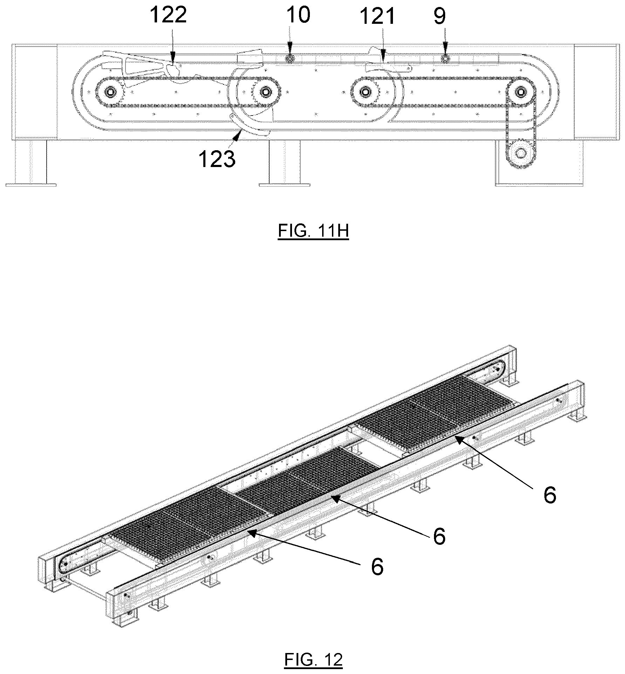

Comme représenté sur la Figure 12, les cadres mobiles 6 peuvent être d'un nombre supérieur à deux. Dans le cas représenté, il s'agit d'une forme d'exécution d'un permutateur à trois cadres mobiles 6. Le principe de l'invention reste identique, à savoir un système de convoyage 3 avec chaînes, pignons et système d'aiguillages pour diriger correctement les paires de galets « avant » et « arrière » de chaque cadre mobile 6. Le nombre de cadres mobiles 6 peut ainsi être démultiplié.

### Description du chemin de roulement des cadres mobiles et leur principe d'entrainement

Tel qu'illustré de manière générale sur les Figures 3 et 4, une paire de galets, par exemple la deuxième paire de galets 83, 84 comporte un axe débordant 9, permettant aux galets d'être supportés par les pignons 4 lors des mouvements de déplacement dans les rainures 73A et 74B en demi-cercle reliant les deux plans de déplacement horizontaux. Ceci est réalisable grâce au fait que les différents pignons 4 sont localisés à l'intérieur de chacun des demi-cercles précités, les roues dentées des pignons 4 coïncidant avec les rainures 73A et 74B en demi-cercle (voir Figure 5 et 6). La première paire de galets 81, 82 a quant à elle un axe prolongé 10, qui permet à la fois aux galets d'être supportés par les pignons 4 lors des mouvements de déplacement dans les rainures 73B et 74A en demi-cercle reliant les deux plans de déplacement horizontaux, mais également de les liaisonner aux chaînes de convoyage 5 situées de part et d'autre du permutateur 1. On notera que l'axe prolongé 10 et l'axe débordant 9 peuvent se trouver indifféremment sur les galets de la première ou de la seconde paire, en fonction de la position des chaînes de convoyage relative aux pignons. Par définition de la fonction à remplir, l'axe prolongé 10 est plus long que l'axe débordant 9.

Les vues en détails de la Figure 5 illustrent le principe de liaisonnement des galets 81, 82, 10 à la chaîne de convoyage 5 ainsi que le principe d'accompagnement des galets 83, 84, 9 par les pignons 4 dans les mouvements montant et descendant du cadre mobile 6.

Comme représenté à la Figure 6, l'arbre moteur 11 entraîne simultanément les trains de pignons situés de part et d'autre du permutateur 1. Les pignons de l'arbre moteur 49 entraînent par la chaîne 51 ceux de l'arbre 111. Le pignon 41 correspondant entraîne par la chaîne 52 les pignons de l'arbre 112. Le pignon 44 entraîne à son tour le pignon 45 de l'arbre 113 lui-même relié par la chaîne 53 au pignon 48 de l'arbre 114.

La Figure 7 montre les trois plans de positionnement parallèles des pignons ainsi que la disposition des chaînes de transmission 51 à 53 et de la chaine de convoyage 5. Les pignons sont donc tous entraînés simultanément et à la même vitesse angulaire.

### Description d'un cycle de permutation complet d'un cadre mobile et d'un mode de résolution exemplatif des problèmes d'aiguillage des galets de roulement par des cames-pont articulées

Les Figures 11A à 11F illustrent, selon un mode d'exécution de l'invention non limitatif, un cycle complet de permutation d'un cadre mobile 6. Un système d'aiguillages, ici illustré par un ensemble de cames-ponts (ou simplement cames) 121-123, permet de guider les galets 8 dans les rainures 7 adéquates afin de permettre à chaque cadre mobile 6 de rester à l'horizontale.

Sur la Figure 11A, la came 122 est en position abaissée (partie droite horizontale, partie gauche oblique) pour éviter que le galet 10 (axe prolongé de la première paire de galets 81, 82) ne suive la première rainure descendante 73A qu'il rencontre. La came 121 est également en position horizontale pour permettre au galet 9 (axe débordant de la deuxième paire de galets 83, 84) de franchir l'ouverture formée par la rencontre de la rainure montante 74A et de la rainure horizontale supérieure 71.

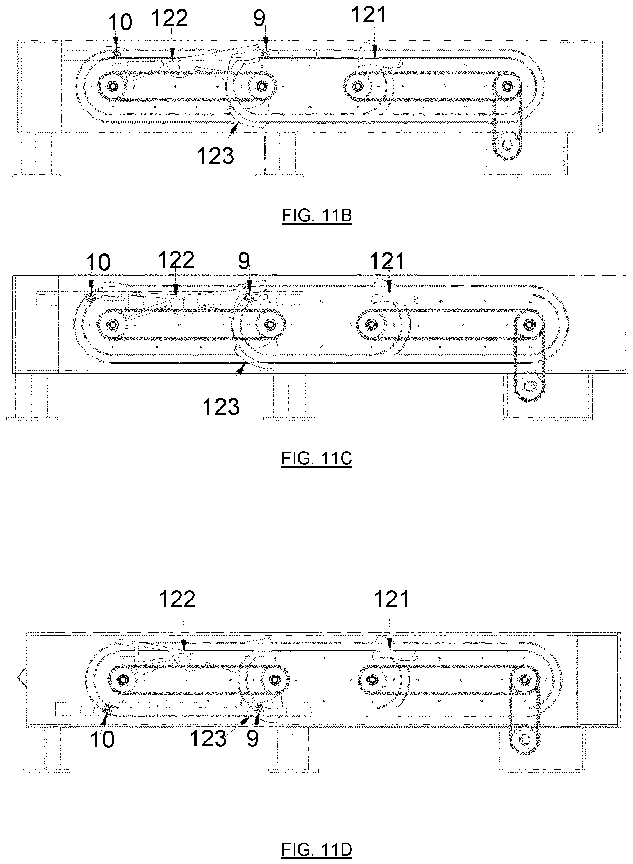

Sur la Figure 11B, le galet 10 rencontre la partie oblique de la came 122 (à gauche) et fait basculer celle-ci à l'horizontale entraînant, par la même occasion, le relèvement de la partie droite de la came 122. Le galet 9 peut ainsi s'engager dans la rainure descendante 73A, l'ouverture étant libérée.

La Figure 11C montre les galets 10 et 9 engagés dans les deux rainures descendantes respectives 73B et 73A.

Sur la Figure 11D, le galet 10, entraîné par la chaîne 5 à laquelle il est liaisonné, débouche dans la rainure correspondant au plan de déplacement inférieur. Il en est de même pour le galet 9 qui est supporté en fin de course par la came 123.

On notera que, si le galet 10 est le galet « avant » et le galet 9 le galet « arrière » lorsque le cadre mobile 6 se trouve dans le plan de déplacement supérieur, la position avant/arrière des galets 10 et 9 s'inverse lorsque le cadre mobile se trouve dans le plan de déplacement inférieur.

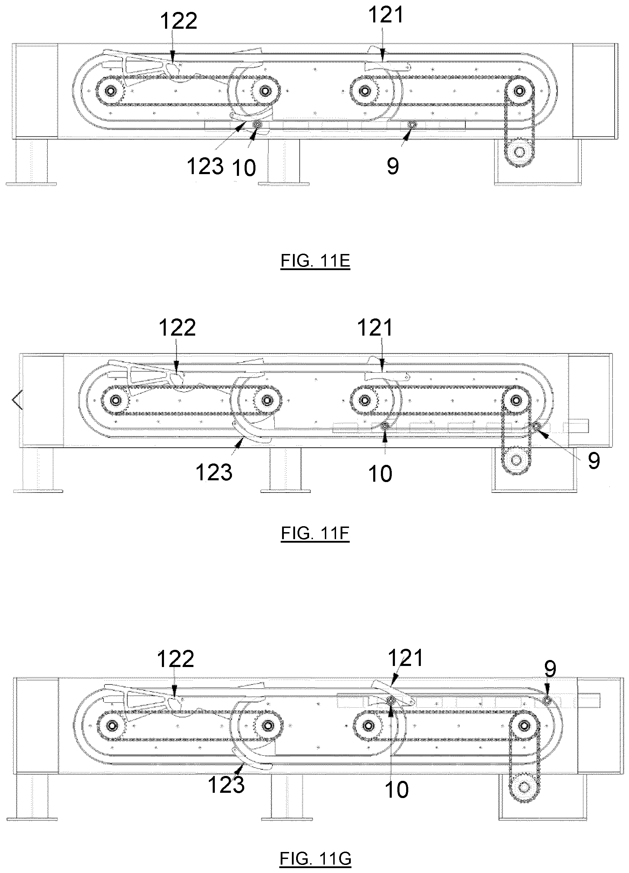

Sur la Figure 11E, le cadre mobile poursuit son déplacement dans la rainure horizontale inférieure. Le galet 10 rencontre la came 123 et la soulève pour continuer sa course.

Sur la Figure 11F, le galet 10, entraîné par la chaîne 5 à laquelle il est solidarisé et supporté par le pignon 44, est maintenant engagé dans la rainure montante 74A. Il en est de même pour le galet 9 qui est supporté pendant le transfert du plan de déplacement inférieur au plan de déplacement supérieur par le pignon correspondant 42.

Sur la Figure 11G, pour rejoindre la rainure horizontale supérieure 71, le galet 10 soulève la came 121.

Sur la Figure 11H, les galets 9 et 10 sont engagés dans la rainure de déplacement supérieure 71. Les cames 122 et 121 sont à nouveau en position horizontale. A la fin du cycle, toutes les cames sont revenues à leur position initiale soit par gravité, soit grâce à un mécanisme ad hoc. Par exemple, le volume de la came 122 est évidé (de manière plus importante) au niveau de son côté oblique à gauche, ce qui lui permet de reprendre sa position initiale par gravité dès que le galet 10 ou 9 est passé.

### Compatibilité du système de permutateur avec un mode de manutention manuel

Dans les ateliers où les flux de manutention ne sont pas automatisés, la présence de permutateurs selon l'invention offrirait un double avantage. D'une part, les flux entrant(s) et sortant(s) du poste de travail seraient toujours dédoublés d'un stock tampon garantissant un fonctionnement pratiquement sans interruption de la machine et de son opérateur (ou de la cellule dans le cas où la machine est robotisée). D'autre part, le travail du manutentionnaire serait rendu plus flexible car ce dernier pourrait mieux prioriser les flux de manutention entre les différents postes de travail dont il a la charge.

Déjà certains ateliers misent aujourd'hui sur l'automatisation des manutentions. L'approvisionnement des postes de travail ainsi que l'évacuation et le restockage des pièces façonnées sont ainsi de plus en plus assurés par des véhicules automatisés dont les déplacements sont entièrement programmés.

Le permutateur selon la présente invention est compatible avec de nombreux équipements, tel qu'expliqué ci-dessous. Ceci le rend ainsi utile dans l'exécution de plusieurs tâches.

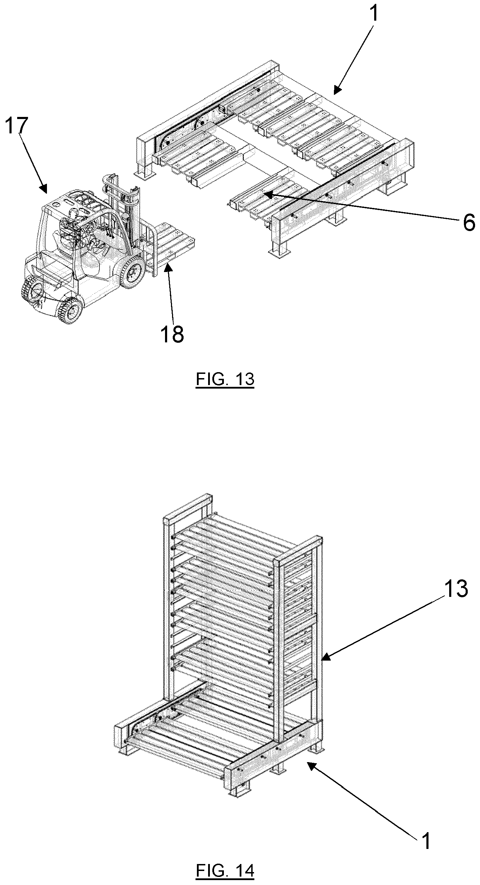

Comme représenté sur la Figure 13, le permutateur de palettes 1 peut être équipé de cadres mobiles 6 ouverts sur un des côtés perpendiculaire aux poutres de la structure portante (voir également Figure 9). Ceci permet aux différents types de véhicules automatisés d'avoir un accès aisé aux palettes, en ce compris les véhicules automatisés sans fourches qui peuvent se glisser sous la palette et la soulever pour la sortir de son logement.

Dans un mode d'exécution préféré de l'invention, le permutateur de palettes 1 est avantageusement conçu pour s'intégrer aux tours de stockage 13 d'un magasin automatisé linéaire (voir Figure 14). Les poutres de la structure portante 2 du permutateur de palettes 1 sont alors dimensionnées pour recevoir la charge que représente le poids propre de la tour de stockage 13 additionné du poids des palettes chargées de leur contenu. La hauteur des échelles des tours de stockage 13 associées à un permutateur 1 est réduite de la hauteur de celui-ci de manière à ce qu'elles soient alignées sur la hauteur des tours standard du magasin.

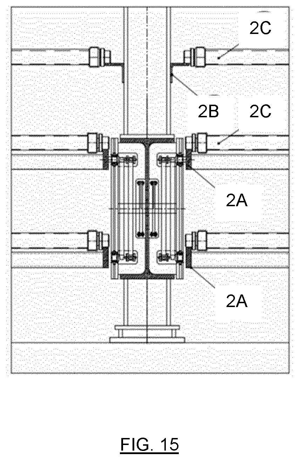

Tel qu'illustré par la Figure 15, les traverses latérales 2A des cadres mobiles 6 du permutateur 1 sont alignées sur les profils 2B supportant les palettes à becs 2C spécifiques des magasins automatisés, de telle sorte que les palettes à becs 2C puissent être transférées du permutateur 1 à une des logettes du magasin et vice et versa. Cette opération de déplacement est effectuée par un ascenseur à palettes circulant parallèlement aux tours de stockage. La symétrie de la poutre formant la structure portante du permutateur 1 permet de dédoubler le mécanisme lorsque plusieurs permutateurs 1 sont juxtaposés, tout en respectant l'alignement avec les échelles des tours du magasin automatisé.

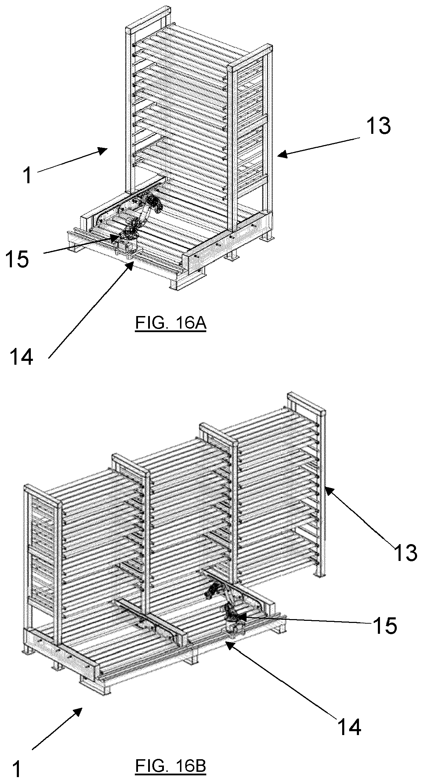

Toujours selon l'invention, la structure du permutateur 1 peut être adaptée en vue de l'intégration d'un track 14 et d'un robot 15, comme représenté sur les Figure 16A et 16B. Par exemple, cette configuration pourrait être particulièrement intéressante dans le cas d'une (micro)cellule de pliage 16A en lui conférant une autonomie de fonctionnement sans assistance pratiquement illimitée et un taux d'exploitation maximisé par la présence du permutateur 1. Dans la configuration représentée à la figure 16B, la cellule robotisée 16 est connectée par deux permutateurs 1 à deux des tours 13 du magasin automatisé. Cette double connexion permet d'introduire de manière automatique les pièces à plier dans la cellule et de déposer les pièces pliées sur le deuxième permutateur 1 suivant un programme d'imbrication et d'empilage préétabli. S'il n'y a qu'un permutateur 1 unique reliant la cellule 16A et le magasin, comme représenté sur la Figure 16A, celui-ci pourrait introduire dans la microcellule, connectée à une seule tour du magasin automatisé, une palette dont une partie de la surface est occupée par les pièces à plat à plier et une autre partie est laissée libre pour recevoir les pièces pliées. Ces mêmes pièces pourraient également être déposées en vrac dans des containers disposés sur la palette. L'avantage du permutateur de palettes de la présente invention est qu'il est modulable et adaptable à toute une série d'équipements, multipliant les gains de temps et la productivité des ateliers de production.

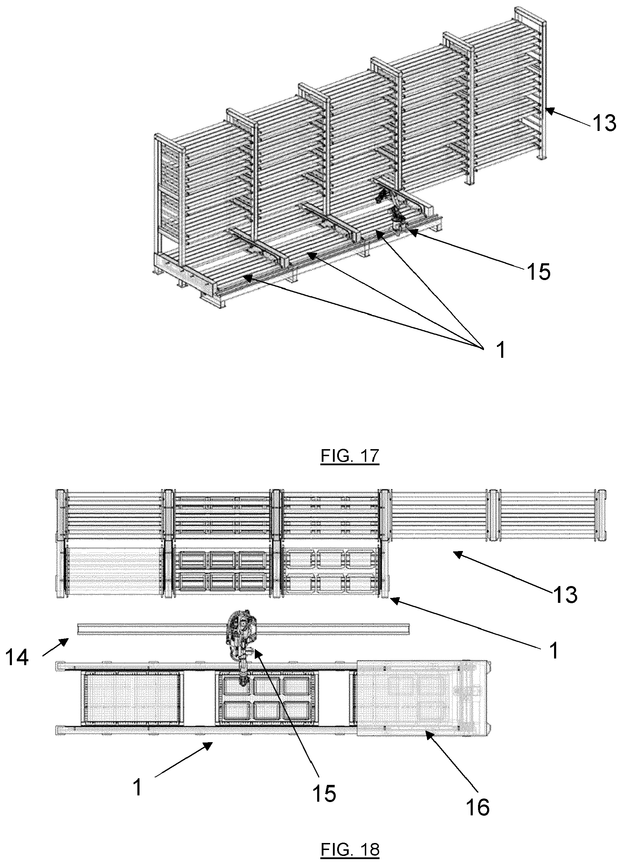

Une configuration de permutateur 1 comportant trois cadres mobiles 6 (comme illustré aux Figures 12 et 18) est un mode particulièrement avantageux de l'invention. En effet, ce mode permet de permuter simultanément trois éléments en une seule opération de quelques secondes. Elle est particulièrement intéressante lorsque le procédé se décompose en trois phases. C'est par exemple le cas pour les machines de découpe laser 16B où les étapes du procédé à savoir, la découpe, l'évacuation des pièces découpées et la préparation de la nouvelle tôle, sont souvent réalisées successivement et non simultanément, induisant ainsi des temps d'attente pendant lesquels la machine n'est pas productive. Cette configuration se distingue également par sa grande simplicité de conception ainsi que par sa compacité.

Dans certains cas de figure, il pourrait s'avérer intéressant de prévoir une triple connexion d'une cellule robotisée 16A au magasin (voir Figure 17). La troisième entrée peut servir à titre exemplatif et non exhaustif à introduire dans la cellule 16A des outils partagés entre plusieurs cellules de pliage 16A connectées au magasin, des outils spécifiques dédiés à un client, des éléments permettant d'optimiser l'empilage des pièces pliées, des préhenseurs de grande taille, etc.

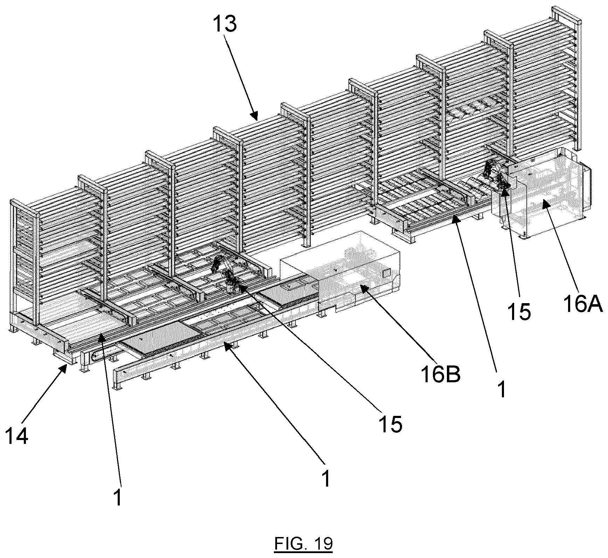

L'exemple représenté sur les Figures 18 et 19 montre une installation combinant d'une part un permutateur 1 équipé de trois cadres mobiles 6 (tel que celui illustré à la Figure 12) intégré à un laser de découpe, et d'autre part trois permutateurs 1 équipés chacun de deux cadres mobiles 6 intégrés aux tours 13 d'un magasin automatisé. L'installation comporte en outre au moins un robot 15 se déplaçant sur un track 14. Cette illustration met en évidence la compacité du laser et de son système d'asservissement constitué d'un permutateur 1 à trois cadres mobiles et d'un robot monté sur un track. Lorsque le laser a terminé une séquence de découpe, les trois tables du laser se mettent simultanément en mouvement pour amener en quelques secondes une nouvelle tôle à la machine dont le taux d'exploitation est ainsi maximisé. Aussitôt que le laser entame une nouvelle séquence de découpe, le robot 15 va prélever sur le premier permutateur 1 du magasin une nouvelle tôle et la déposer sur la table du laser située en vis-à-vis. Ensuite, il va prélever les pièces découpés lors de la séquence précédente et les déposer sur le deuxième permutateur 1 du magasin. Une fois ce travail achevé, le robot 15 évacuera le squelette de tôle vers le troisième permutateur 1 du magasin. Les différents préhenseurs nécessaires au robot 15 pour effectuer les manutentions de pièces de tailles diverses ainsi que des squelettes peuvent par exemple être avantageusement disposés sur les faces externes des tours 13 de stockage du magasin. Le robot 15 est quant à lui dimensionné pour que sa longueur d'extension lui permette d'atteindre les endroits les plus éloignés des tables du laser ou des palettes des permutateurs 1 du magasin. La structure portante du permutateur peut être mise à profit pour supporter le track et le robot. Une variante avec colonnes et track suspendu est également envisageable (non représenté).

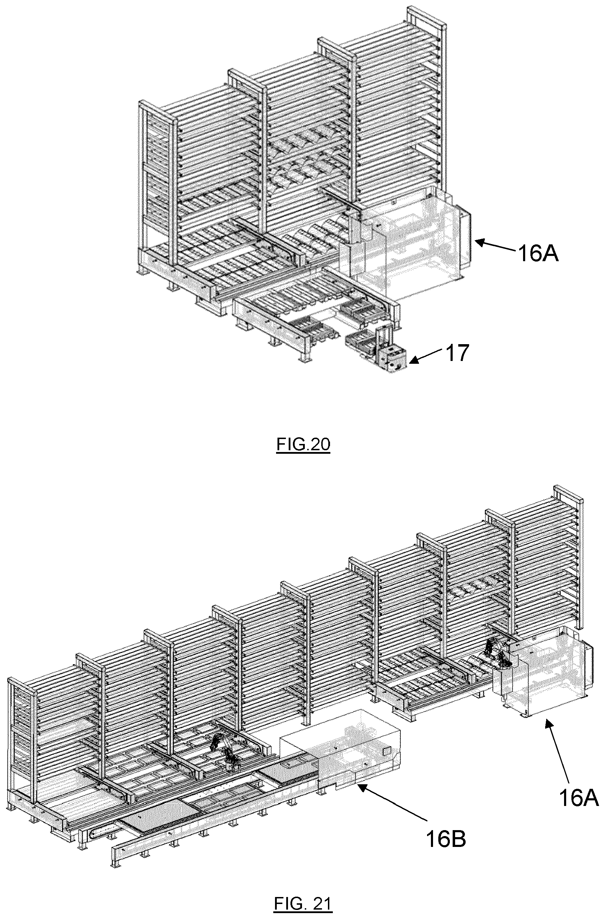

La figure 20 illustre une combinaison de différents mode de gestion des flux d'approvisionnement de la cellule 16A. En plus d'être directement connectée au magasin automatisé, la cellule 16A est pourvue d'un permutateur 1 dédié aux europalettes (EPAL), tourné vers l'atelier et permettant de gérer une partie des flux entrants et sortants à l'aide d'un élévateur 17 assisté ou d'un véhicule à guidage automatique et programmé (AGV).

La figure 21 illustre comment il serait possible de disposer les cellules de découpe 16B, tels que les lasers ou les poinçonneuses, ainsi que les cellules de pliage 16A autour d'un magasin automatisé linéaire afin de connecter l'ensemble des machines entre elles et augmenter ainsi l'autonomie de fonctionnement sans assistance et le taux d'exploitation de l'outil de production dans son ensemble.

### Liste des symboles de référence

- 1: Permutateur de palettes
- 2: Structure portante du permutateur
- 21: Pied de poutre
- 2A: Traverse latérale de cadre mobile
- 2B: Profil de support
- 2C: Palette à bec
- 3: Système de convoyage
- 4: Pignons (références 41-49 pour les différents pignons)
- 5: Chaîne de convoyage
- 51-53: Chaînes de transmission
- 6: Cadre mobile (références 61 et 62 également)
- 7: Rainure de guidage (références 71, 72, 73A, 73B, 74A, 74B pour les différentes rainures)
- 8: Galet de roulement et de guidage (références 81-84 pour les différents galets)
- 9: Axe débordant du galet
- 10: Axe prolongé du galet
- 11: Arbre moteur
- 111-114: Arbres de transmission
- 12: Came-pont (références 121-123 pour les différentes cames)
- 13: Tour de stockage (magasin automatisé)
- 14: Track
- 15: Robot
- 16A: Microcellule de pliage
- 16B: Découpe laser
- 17: Chariot élévateur ou véhicule automatisé
- 18: Palette

## Revendications

1. Un permutateur (1) de palettes comprenant :
- une structure portante (2) ;
- au moins deux cadres mobiles (6) aptes, en utilisation, à porter chacun une palette (18), chaque cadre mobile (6) comprenant une première paire de galets (81, 82) et une seconde paire de galets (83, 84) sur ses côtés latéraux ;
- un système de convoyage (3) situé sur la structure portante (2) permettant le déplacement des cadres mobiles (6) et relié à un arbre moteur (11) ;
- un ensemble de rainures de guidage (71, 72, 73A, 73B, 74A, 74B) formant une boucle fermée à rails séparés et un chemin de guidage pour chaque cadre mobile (6), comprenant un premier chemin et un second chemin, lesdites rainures (71, 72, 73A, 73B, 74A, 74B) accueillant les galets (81, 82 ; 83, 84) des cadres mobiles (6) ;
- un système d'aiguillages à cames (12, 121, 122, 123) des paires de galets (81, 82 ; 83, 84) dans les rainures de guidage (71, 72, 73A, 73B, 74A, 74B) ;
le système d'aiguillages à cames (121, 122, 123) étant à apte à guider, en utilisation, les paires de galets (81, 82, 10 ; 83, 84, 9) de sorte que la première paire (81, 82, 10) emprunte le premier chemin et la seconde paire (83, 84, 9) emprunte le second chemin de manière à déplacer les cadres mobiles (6) le long de la boucle fermée tout en restant en permanence parallèles entre eux horizontalement et orientés dans le même sens.

2. Le permutateur de palettes (1) selon la revendication 1, **caractérisée en ce que** la structure portante (2) comprend deux poutres parallèles, le système de convoyage (3) et l'ensemble de rainures de guidage (71, 72, 73A, 73B, 74A, 74B) étant répartis de manière symétrique sur ou dans chacune des poutres, de sorte que les cadres mobiles (6) sont déplacés entre les deux poutres par le système de convoyage (3).

3. Le permutateur de palettes (1) selon l'une quelconque des revendications précédentes, **caractérisé en ce que** le système de convoyage (3) comprend une pluralité de pignons (4, 41-49) et de chaînes de transmission (51, 52, 53), ou alternativement une pluralité de poulies et courroies crantées, pour mettre en mouvement les deux cadres mobiles (6) via deux chaînes de convoyage (5) situées de part et d'autre des cadres mobiles (6), de sorte que les cadres mobiles (6) sont déplacés à l'aide de galets mobiles roulant à l'intérieur des rainures de guidage (71, 72, 73A, 73B, 74A, 74B).

4. Le permutateur de palettes (1) selon l'une quelconque des revendications précédentes, **caractérisé en ce que** système d'aiguillages comprend une pluralité de cames (12, 121-123) permettant de guider les première et seconde paires de galets (81, 82, 10 ; 83, 84, 9) respectivement dans les premier et second chemins des rainures de guidage (71, 72, 73A, 73B, 74A, 74B).

5. Le permutateur de palettes (1) selon l'une quelconque des revendications précédentes, **caractérisé en ce que** les rainures de guidages (7) comprennent une rainure (71) correspond à un plan de déplacement horizontal supérieur, une rainure (72) correspond à un plan de déplacement horizontal inférieur, deux rainures (73A, 73B) en demi-cercle permettant le déplacement descendant du plan supérieur au plan inférieur, et deux rainures (74A, 74B) en demi-cercle permettent le déplacement montant du plan inférieur au plan supérieur, lesdites rainures (71, 72, 73A, 73B, 74A, 74B) définissant les deux chemins précités, lesquels ont une forme oblongue et sont décalés horizontalement l'un par rapport à l'autre.

6. Le permutateur de palettes (1) selon la revendication 5, **caractérisé en ce que** les galets de la première paire de galets (81, 82) comprennent un axe prolongé (10) permettant à la fois à un jeu de pignons (44, 46) de supporter lesdits galets (81, 82) lors de leur déplacement dans les rainures en demi-cercle (73B, 74A) reliant les deux plans de déplacement horizontaux, et également de liaisonner lesdits galets (81, 82) aux chaînes de convoyage (5).

7. Le permutateur de palettes (1) selon la revendication 6, **caractérisé en ce que** les galets de la deuxième paire de galets (83, 84) comprennent un axe débordant (9), permettant à un jeu de pignons (42, 45) de supporter lesdits galets (83, 84) lors de leur déplacement dans les rainures en demi-cercle (73A, 74B) reliant les deux plans de déplacement horizontaux.

8. Le permutateur de palettes (1) selon la revendication 5, **caractérisé en ce que** les chemins de roulement des deux paires de galets (8) de chaque cadre mobile (6) ont une partie commune au niveau des plans de déplacement horizontal supérieur et inférieur et sont distincts au niveau des rainures en demi-cercle (73A, 73B, 74A, 74B) permettant les déplacements montant et descendant des cadres mobiles (6).

9. Le permutateur de palettes (1) selon l'une des quelconques revendications précédentes, **caractérisé en ce que** les cadres mobiles (6) sont pleins ou ajourés.

10. L'utilisation du permutateur de palettes (1) selon la revendication 7, pour la mise en œuvre du cycle de mouvements suivants relatifs à l'échange des positions initiales d'un premier cadre mobile (61) et d'un second cadre mobile (62), aptes à supporter chacun une palette (18) :
- au début du cycle, le système de convoyage (3) est activé par la mise en rotation de l'arbre moteur (11) lorsque le premier cadre mobile (61) est en position sur le plan de déplacement horizontal supérieur, chaque galet de roulement avant (81, 82) ayant son axe prolongé (10) entraîné par la chaîne de convoyage (5) et apte à s'engrener dans les pignons (44, 46) lors des mouvements de déplacement dans les rainures en demi-cercle (73B, 74A) reliant les deux plans de déplacement horizontaux ; et chaque galet de roulement arrière (83, 84) ayant son axe débordant (9) apte à s'engrener dans les pignons (42, 45) lors des mouvements de déplacement dans les rainures en demi-cercle (73A, 74B) reliant les deux plans de déplacement horizontaux ;
- sous l'effet de l'entraînement, le galet de roulement avant (81, 82, 10) arrive au croisement de la rainure horizontale supérieure (71) et de la première rainure descendante (73A) ;
- une première came (122) se trouvant à ce croisement étant en position abaissée, avec une partie droite suivie d'une partie oblique, le galet de roulement avant (81, 82, 10) reste guidé dans la rainure horizontale supérieure (71) et ensuite dans la seconde rainure descendante (73B) grâce au pignon (46), la rencontre du galet (81, 82, 10) avec la partie oblique de la première came (122) entraînant le relèvement de ladite came (122), la partie oblique basculant à l'horizontale et la partie droite étant relevée, libérant le passage dans la première rainure descendante (73A) pour le galet de roulement arrière (83, 84, 9) ;
- une deuxième came (121) se trouvant au croisement de la rainure horizontale supérieure (71) avec la première rainure montante (74A) en position horizontale, le galet de roulement arrière (83, 84) franchit l'ouverture vers la première rainure montante (74A) et poursuit son chemin dans la rainure horizontale supérieure (71) ;
- la première came (122) étant relevée, le galet de roulement arrière (83, 84) est guidé dans la première rainure descendante (73A) ;
- lorsque le galet de roulement avant (81, 82, 10) arrive au niveau de la rainure horizontale inférieure (72), il continue à être entraîné plus loin dans cette rainure par la chaîne de convoyage (5) alors que, simultanément, le galet de roulement arrière (83, 84, 9) arrive au niveau de la troisième came (123) en fin de course dans la première rainure descendante (73A), ladite troisième came (123) étant en position abaissée, ce qui laisse passer le galet arrière (83, 84, 9)
- le cadre mobile (61) poursuit son déplacement dans la rainure horizontale inférieure (72) et le galet de roulement avant (81, 82, 10) soulève la troisième came (123) pour continuer sa course ;
- le galet de roulement arrière (83, 84, 9) supporté par le pignon (42) est entraîné dans la seconde rainure montante (74B) et le galet de roulement avant (81, 82, 10) supporté par le pignon (44) est entraîné dans la première rainure montante (74A), de manière à effectuer le transfert du plan de déplacement inférieur au plan de déplacement supérieur ;
- le galet de roulement avant (81, 82) débouche dans la rainure horizontale supérieure (71) en soulevant la deuxième came (121) et simultanément avec le galet de roulement arrière (83, 84, 9) ;
- le premier cadre mobile (61) revient à sa position de départ dans la rainure horizontale supérieure (71) et les deuxième came (121) et première came (122) sont soit en position abaissée pour le cycle suivant grâce à la gravité, soit sont ramenées en position abaissée par un mécanisme ad hoc ;
- les mouvements sont similaires pour le second cadre mobile (62), celui-ci se trouvant au début du cycle en position sur le plan de déplacement horizontal inférieur.

11. Une tour de stockage (13) de magasin automatisé à tour ou vertical, comprenant, intégré à sa base, un permutateur de palettes (1) selon l'une des quelconques revendications précédentes.

12. Une installation de fabrication automatisée, comprenant un magasin automatisé ainsi qu'au moins une cellule de pliage (16A) et/ou une cellule de découpe laser (16B), ledit magasin automatisé comprenant au moins une tour de stockage selon la revendication 11.
